# EUROPEAN PATENT APPLICATION

(11) **EP 0 594 192 A1**
(43) Date of publication of application: **27.04.1994**
(21) Application number: 93117151.6
(22) Date of filing: 22.10.1993
(51) Int. Cl.: C08G 75/02

(54) **Production of poly(arylene sulfide)polymers containing reduced amounts of oligomers**

(30) Priority: 23.10.1992 US 965497
(71) Applicant: PHILLIPS PETROLEUM COMPANY, Bartlesville Oklahoma 74004 (US)
(72) Inventor: Fahey, Darryl Richard, Bartlesville, OK 74006 (US); Allison, John Brian, Bartlesville, OK 74029 (US); Gharfeh, Samir G., Bartlesville, OK 74006 (US)
(74) Representative: Dost, Wolfgang, Dr.rer.nat., Dipl.-Chem.

(57) **Abstract**

A method for removing oligomers and non-polymeric impurities from poly(arylene sulfide) polymers is provided in which a poly(arylene sulfide) polymer associated with oligomers and non-polymeric impurities is contacted with a solvent at a sufficient temperature to substantially dissolve the polymer, oligomers and impurities, then the solution is cooled to a temperature at which the poly(arylene sulfide) precipitates while oligomers and impurities remain in solution, then the precipitated polymer is separated from the solution containing the oligomers and impurities. A polymer product produced by this method is also disclosed.

## Description

### BACKGROUND OF THE INVENTION

This invention relates to a method of purifying a poly(arylene sulfide) polymer and the composition produced thereby. More particularly, in a more preferred aspect, this invention pertains to removal of oligomers and non-polymeric impurities from a poly(phenylene sulfide) polymer and the composition produced thereby.

Poly(arylene sulfide) polymers are known in the art and have found wide use due to their desirable thermal and chemical resistance. Poly(arylene sulfide) polymers are used to prepare films, fibers, composites and molded parts by a variety of methods known to those of skill in the art.

Oligomers and non-polymeric by-products created during the production of poly(phenylene sulfide) polymer products may contribute to certain processing and final product problems. Problems attributed to high oligomer or non-polymeric by-product concentrations in the polymer include mold plate out, die face build up, exhaust duct fouling, bubble formation in molded parts, corrosion of processing equipment, injection molding drool, and off gassing during injection molding. Solvent extraction methods have been used to remove some of the oligomers from poly(phenylene sulfide) products, but a detrimental oligomer concentration usually remains after extraction. Thus, there still exists a need for an improved oligomer and non-polymeric impurity removal technique.

### SUMMARY OF THE INVENTION

An object of this invention is to minimize the oligomers and non-polymeric impurities in a poly(arylene sulfide) polymer.

In accordance with this invention, a poly(arylene sulfide) polymer is subjected to at least a three step process to remove undesirable oligomers and non-polymeric components. First, the poly(arylene sulfide) polymer is contacted with a solvent at temperatures sufficient to completely dissolve the poly(arylene sulfide) polymer, oligomers and non-polymeric impurities, thereby forming a solution. Then, the solution is cooled to a temperature sufficient to precipitate the poly(arylene sulfide) polymer but not low enough to cause the precipitation of oligomers and other non-polymeric impurities. Finally, the resulting slurry is subjected to a separation at the elevated temperature to remove the solid purified poly(arylene sulfide) polymer product, thereby removing the dissolved oligomers and non-polymeric impurities from the poly(arylene sulfide).

### BRIEF DESCRIPTION OF THE DRAWINGS

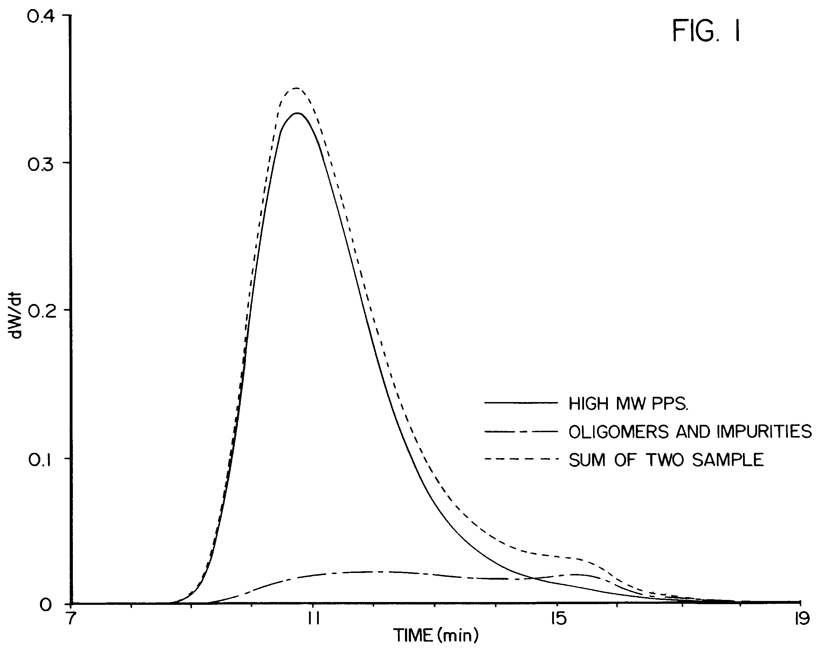

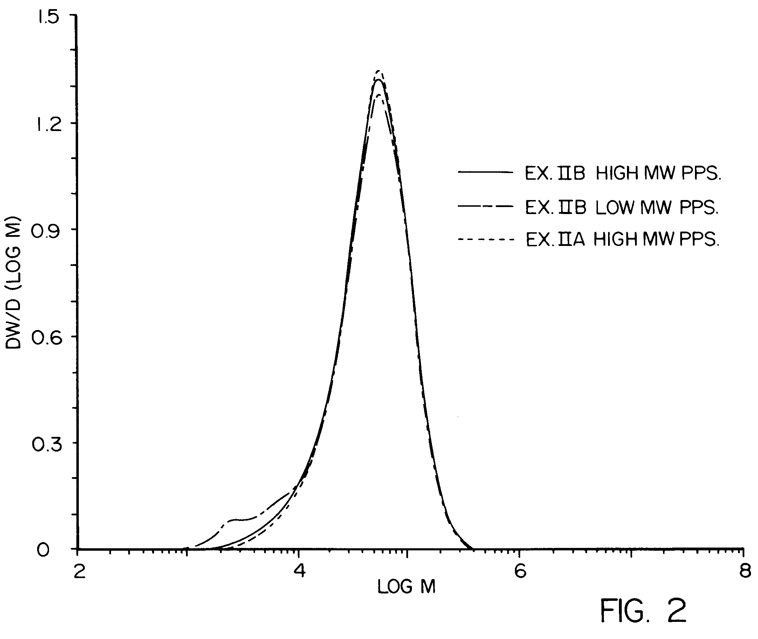

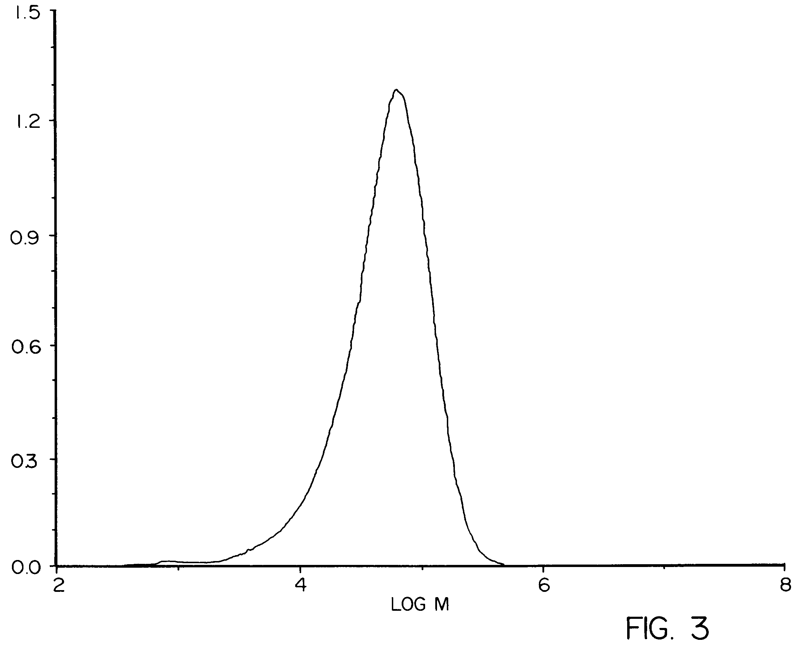

Figure 1 presents gel permeation chromatograms for a poly(phenylene sulfide) polymer and for the purified poly(phenylene sulfide) polymer prepared by the invention method as well as the oligomers and non-polymeric impurities removed by the invention method. Figures 2 and 3 present molecular weight distributions determined by gel permeation chromatography for a poly(phenylene sulfide) polymer and the purified poly(phenylene sulfide) polymers prepared by the invention method.

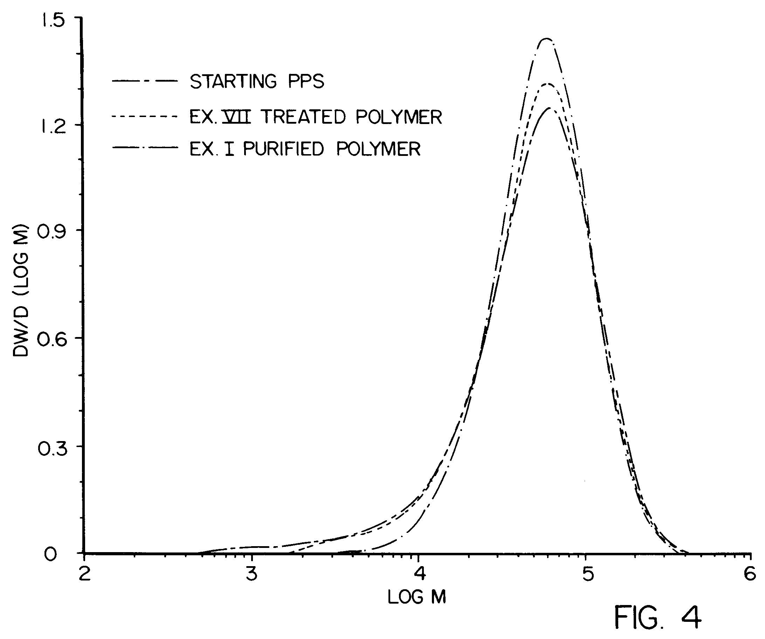

Figure 4 presents molecular weight distributions determined by gel permeation chromatography for a poly(phenylene sulfide) polymer purified according to the invention method and a poly(phenylene sulfide) polymer purified using a lower filtration temperature.

### DESCRIPTION OF THE PREFERRED EMBODIMENTS

The poly(arylene sulfide) polymers useful in this invention are those prepared according to any method known to those of ordinary skill in the art, such as, for example, those disclosed in U.S. 3,354,129, U.S. 3,919,177, U.S. 4,038,261, U.S. 4,038,262, U.S. 4,116,947, U.S. 4,282,347 and U.S. 4,350,810, which patents are hereby incorporated by reference. The poly(arylene sulfide) polymer is generally prepared by contacting reactants comprising a dihalosubstituted aromatic compound, a sulfur source and a polar organic compound, optionally in the presence of alkali metal carboxylates and/or polyhaloaromatic compounds, under polymerization conditions.

Examples of poly(arylene sulfide) polymers suitable for purposes of this invention include poly(2,4-toluene sulfide), poly(4,4'-biphenylene sulfide) and poly(phenylene sulfide). Because of its availability and desirable properties (such as high chemical resistance, non-flammability, and high strength and hardness) poly(phenylene sulfide) is the presently preferred poly(arylene sulfide) polymer.

During the preparation of the poly(arylene sulfide) polymer, certain by-products and oligomers can be formed. These non-polymeric by-products and oligomers can become associated with the poly(arylene sulfide) polymer as a physical mixture during recovery. The term "oligomers" as used herein, is meant to denote compounds containing arylene sulfide repeat units in numbers less than about 15. Non-polymeric impurities include unreacted monomer and other reaction materials such as alkali metal carboxylates, and the products of side reactions and like materials. The non-polymeric impurities which can be removed by dissolving them in the suitable solvent are not meant to include any alkali metal halide by-product produced in the reaction. This alkali metal halide by-product material is typically removed during conventional recovery of the poly(arylene sulfide) polymer. If the poly(arylene sulfide) polymer employed in this invention contains such alkali metal halides, it is preferred to remove them as much as is reasonably possible prior to dissolving the poly(arylene sulfide) polymer, oligomers and non-polymeric impurities in the solvent. Removal can be effected, for example, by washing the polymer with water, optionally at elevated temperatures.

In an alternative embodiment, the alkali metal halides associated with the polymer can be removed after the poly(arylene sulfide) polymer, oligomers and non-polymeric impurities are dissolved in the suitable solvent. For this embodiment, the solvent should be chosen such that the alkali metal halides are relatively insoluble in the solvent so that the solid alkali metal halides can easily be separated from the poly(arylene sulfide) polymer containing solution.

Any suitable solvent can be used in this invention. Suitable solvents are those in which the poly(arylene sulfide) polymer, oligomers and non-polymeric impurities can be substantially dissolved. Such solvents should remain liquid at the temperatures and pressures involved. Solvents useful in this invention to dissolve poly(arylene sulfide) polymers and associated oligomers and non-polymeric impurities include, but are not limited to, amides, lactams, sulfones, ethers, and halogenated aromatics. Examples of amides and lactams which may be useful in the present invention include tetramethyl urea, N,N'-ethylenedipyrrolidone, N-methyl-2-pyrrolidone (NMP), N-ethyl-2-pyrrolidone, N-cyclohexyl-2-pyrrolidone, caprolactam, N-methylcaprolactam, and hexamethylphosphoramide. Possible sulfones useful as solvents in the present invention include sulfolane, diphenyl sulfone, and chlorinated diphenyl sulfones. Examples of sulfides possibly useful in the present invention are diphenyl sulfide and chlorinated diphenyl sulfides. Ethers which may be useful as solvents in the present invention include diphenyl ether and chlorinated diphenyl ethers. Chloronaphthalene is the preferred halogenated aromatic useful as a solvent in the present invention.

Any suitable amount of solvent may be used to dissolve the poly(arylene sulfide) polymer, oligomers and non-polymeric impurities, however, the concentration of polymer in solution is limited by the filterability of the solution upon cooling.

It is preferred to employ an amount of solvent such that the poly(arylene sulfide) polymer concentration in the solvent is less than about 5 weight percent, based on the weight of the solvent, since it has been observed that polymer precipitation above about 5 weight percent polymer can cause the entire mixture to gel. The most preferred poly(arylene sulfide) concentration is in the range of about 0.5 to about 4 weight percent.

Any suitable temperature can be used for the step in which the poly(arylene sulfide) polymer, oligomers and non-polymeric impurities are dissolved. The temperature will vary according to which poly(arylene sulfide) polymer and solvent are employed and whether additional compounds are present. For example, the temperature required for complete dissolution of poly(phenylene sulfide) and associated oligomers and non-polymeric impurities in N-methylcaprolactam is typically about 220°C to about 230°C. Generally, temperatures exceeding about 230°C should be avoided since poly(phenylene sulfide) could begin to degrade at about this temperature in the solvent. It is preferred to agitate the solution in order to further promote dissolution of the polymer, oligomers, and impurities.

In addition, promoters may optionally be added to increase the particle size of the precipitating poly(arylene sulfide) to improve filterability. Possible promoters useful in the present invention include, but are not limited to, alkali metal salts and water. Examples of possible alkali metal salts include carboxylates and halides such as, for example sodium acetate and lithium chloride. The promoter should be soluble in the suitable solvent.

When a promoter is employed, the temperature at which the poly(arylene sulfide) polymer, oligomers and non-polymeric impurities dissolve in the solvent will be altered. For example, a poly(phenylene sulfide) polymer will dissolve in N-methylcaprolactam in the presence of water at a temperature above that at which the polymer would dissolve in the pure solvent. Depending on the promoter chosen, the pressure generated during the process could also be altered. One of ordinary skill in the art can select the promoter and solvent used in the invention in order to generate desirable particle size and avoid undesirably high temperatures and pressures without undue experimentation.

Once essentially complete dissolution of the solids is attained, agitation, if any, and heating are discontinued. The solution is then cooled at a rate in the range of about 0.1 to 20°C minute.

The solution is cooled to a temperature at which the poly(arylene sulfide) polymer solidifies, but at which the oligomers and other non-polymeric impurities remain in solution. For example, precipitation of poly(phenylene sulfide) in N-methylcaprolactam occurs at temperatures in the range of about 140°C to about 190°C. As the solution cools, precipitated polymer is more properly described as being in a slurry in the solvent containing the dissolved oligomers and impurities.

After precipitation of the polymer, cooling of the resulting slurry is discontinued and separation of the solid polymer from the solution is initiated. Slurry temperature is maintained at an elevated temperature during the separation process in order to insure that the dissolved impurities remain in solution. For poly(phenylene sulfide) polymers, the filtration will generally be performed at a temperature in the range of about 130 to 200°C, preferably 150 to 170°C.

The separation step can be performed in any manner known to those of ordinary skill in the art for separating solids from liquids, such as, for example, filtration or centrifugation. The resultant poly(phenylene sulfide) precipitate may be washed or extracted with a solvent to remove remaining minor amounts of oligomers or non-polymeric by-products. Preferably at least one solvent wash is performed. The solvent is preferably the solvent used for dissolution of the polymer in the first step of the invention. Preferably the solvent is heated to about 140 to about 200°C prior to contact with the polymer precipitate. Heated solvent allows for more oligomer removal since oligomers will dissolve more easily in the solvent at elevated temperatures, and since, use of hot rinse solvent prevents the "knocking out" of dissolved materials in the solvent adhering to the filter cake during the filtration.

A further understanding of the present invention and its advantages will be provided by reference to the following examples. The examples are provided merely to illustrate the practice of the invention and should not be read as limiting the scope of the invention or the appended claims in any way. Reasonable variations and modifications, not departing from the essence and spirit of the invention, are contemplated to be within the scope of patent protection desired and sought.

### Example I

Polymer molecular weight determinations were carried out on a specially constructed high temperature gel permeation chromatography instrument connected to a flame ionization detector. Determinations were done in 1-chloronaphthalene at 220°C. Results are reported in terms of the weight average molecular weight (Mw) in units of grams per mole (g/mol) and are based on polystyrene standards.

A mixture of 1.095 kg-moles of a sodium hydroxide (NaOH) aqueous solution with 1.244 kg-moles of a sodium hydrosulfide (NaSH) solution was prepared. This solution, 0.37 kg-moles of sodium acetate (NAOAc) powder, and 3.33 kg-moles of NMP were added to a stirred (300 rpm) reactor, which was then purged with nitrogen. This mixture was then dehydrated to remove water.

Then 1.0986 kg-moles of p-dichlorobenzene (DCB) was charged to the reactor. The mixture was heated to about 225°C and held for 5 hours. Then the reaction temperature was increased to 300°C and held for about 3 hours. The polymer was recovered by first cooling to solidify the polymer, then adding the polymer slurry to a vessel containing NMP, then filtering to recover the polymer, then washing the polymer with NMP, then filtering; then washing the polymer six times with deionized water at ambient temperature. The polymer was then washed with an aqueous acetic acid having a pH of 5.5 at a temperature of 70°C and then recovered by filtration.

Approximately 100 grams of N-methylcaprolactam and 1 gram of the poly(phenylene sulfide) polymer prepared above were placed in a 500 ml round bottom flask equipped with a glass thermowell. A thermocouple was submersed in mineral oil in the thermowell. A magnetic stirring bar was placed in the flask. The flask was placed in a heating mantle. Stirring was controlled externally by a variable-speed magnetic stirrer upon which the heating mantle was placed. An argon atmosphere was maintained above the mixture in the flask by continuously passing a stream of argon through a T-valve inserted into the flask opening.

The mixture was stirred continuously during heating. At about 222°C all solids appeared to be dissolved. The solution was a transparent yellow-amber color. Heating was discontinued and the solution was allowed to cool. At about 170° crystals began forming. The mixture had a white cloudy appearance at about 135°C when filtration was initiated. Filtration was accomplished by pouring the mixture into a steam heated Buchner funnel filter. A continuous vacuum was applied to the flask below the Buchner funnel filter.

After the majority of the solvent was removed from the filter cake, additional N-methylcaprolactam held at a temperature of about 140°C was poured onto the filter cake for rinsing. A second rinsing of the filter cake was performed with N-methylcaprolactam held at about 140°. Finally, the filter cake was rinsed with methylene chloride held at room temperature. The filter cake was dried overnight in a vacuum oven at about 88°C to remove remaining solvents.

Similarly, the liquor which passed through the filter at high temperatures was allowed to cool and was filtered. This filter cake was also rinsed and dried as described above.

The dried filter cakes were analyzed by gel permeation chromatography (GPC). The GPC chromatogram is depicted in Figure 1. This analysis indicated that the majority of the low molecular weight poly(phenylene sulfide) (oligomers) and non-polymeric impurities, totaling 0.1200g, remained dissolved in the solvent during the hot filtration and passed through the filter. The higher molecular weight poly(phenylene sulfide), totaling 0.8238g, was collected as the filter cake during the hot filtration.

### Example II

Two similar experiments designated IIA and IIB were performed using 2 grams and 5 grams of the respectively poly(phenylene sulfide) polymer prepared in Example I and 100g of N-methylcaprolactam. Heating was discontinued at about 220°C. After allowing the solution to cool to about 155°C, the mixtures were poured into the filter. The other experimental parameters were substantially the same.

For Example IIA, the higher molecular weight poly(phenylene sulfide), totaling 1.7391g, was collected as the filter cake during the hot filtration. For Example IIB, both the high molecular weight polymer and the lower molecular weight oligomers were collected and isolated.

As described in Example I above, the dried filter cakes were analyzed by GPC and the molecular weight distributions are depicted in Figure 2. This analysis indicated that the majority of the low molecular weight poly(phenylene sulfide) (oligomers) remained in solution during the hot filtration and passed through the filter.

### Example III

A similar experiment was performed using 1 gram of the poly(phenylene sulfide) polymer prepared in Example I and 100 grams of diphenyl ether. Substantially complete dissolution of solids was observed at 230°C. The heating was discontinued and the clear solution was allowed to cool. At 190°C, the solution begin to appear cloudy; at 170°C, the formation of a cloudy white gelatinous mixture was observed.

Upon reaching 140°C, the mixture was poured into a steam heated filter funnel. The funnel and flask were washed with hot diphenyl ether. The filtered product was allowed to cool, then rinsed with warm diphenyl ether. The filter cake was washed with methylene chloride to rinse off any remaining diphenyl ether. The product was air-dried for two hours, then dried overnight in a vacuum oven at 88°C.

The filter cake was analyzed by GPC and the molecular weight distribution is depicted in Figure 3. Upon analysis, it was determined that the majority of the low molecular weight poly(phenylene sulfide) (oligomers) (0.0024g) passed through the filter during the hot filtration. All of the higher molecular weight poly(phenylene sulfide), 0.9222g, remained in the filter cake during the hot filtration.

### Example IV

Approximately 250 grams 1-chloronapthalene and 25 grams of the poly(phenylene sulfide) prepared in Example I were placed in the flask and heated to 220°C. Dissolution was observed; however the solution was too viscous for the use of the magnetic stirrer.

The viscous solution was allowed to cool, forming a solid white mass. Thus, the polymer was not purified in this example.

### Example V

A less concentrated solution of the PPS in chloronapthalene was prepared. Five grams of the PPS was placed in the flask with 100 grams of 1-chloronapthalene and heated to 224°C to form a yellow-amber transparent solution. Heating was discontinued and the solution cooled. The formation of crystals was observed upon cooling below 196°C. The contents of the flask crystallized to form a solid, although soft, cottony mass. Thus, no oligomers were able to be removed in this procedure.

### Example VI

Five grams of the PPS was placed in 200 grams of 1-chloronapthalene in the flask. The mixture was heated to 223°C to form a solution. Upon cooling, crystallization began. The contents of the flask gelled and formed a soft white mass.

### Example VII

One gram of the PPS and 100 grams of the 1-chloronapthalene were placed in the flask. The mixture was heated to 224°C to form a solution. Upon cooling, a white thick slurry was produced.

Approximately 100 grams of chloronapthalene was added to the slurry, which was then heated to 218°C to form a solution. Upon cooling, a white slurry was formed. The slurry was filtered at 100°C. The filter cake was rinsed once with 1-chloronapthalene at 25°C and once with methylene chloride at 25°C. The rinsed filter cake was dried overnight and then further dried in a vacuum oven at 120°F.

The dried filter cake was analyzed by GPC. The high molecular weight product, 0.98 grams, did not appear to contain any oligomers or low molecular weight impurities.

### Example VIII

This example demonstrates that lesser amounts of oligomers are removed when the filtration is performed at lower temperatures.

One gram of the PPS was placed in 200 grams of 1-chloronapthalene in the flask and heated to 218°C to form a solution. The solution was then cooled to form a slurry which was allowed to cool to room temperature. The slurry was filtered at room temperature and the filter cake was washed once with 1-chloronapthalene and once with methylene chloride. The rinsed filter cake was stored at room temperature overnight, then dried in a vacuum oven at 120°F.

Results from GPC analysis of the dried filter cake indicate that only a small portion of the oligomers and non-polymeric impurities were removed as a result of the above-described procedure. For ease of comparison, the molecular weight distributions determined by GPC were plotted with the results from Example I, see Figure 4.

While this invention has been described in detail for the purpose of illustration, it is not meant to be limited thereby, but is intended to cover all changes and modifications within the spirit and scope thereof.

## Claims

1. A method for purifying a starting arylene sulfide polymer, wherein oligomers and non-polymeric impurities are removed, characterized by
(a) dissolving said starting arylene sulfide polymer in a heated solvent to form a solution;
(b) lowering the temperature of said solution to precipitate arylene sulfide polymer but not said oligomers or impurities; and
(c) separating the precipitated purified arylene sulfide polymer from said solution containing said oligomers and impurities at said lowered temperature.

2. The method of claim 1, wherein said solvent is selected from amides, lactams, sulfones, sulfides, ethers and halogenated aromatic solvents.

3. The method of claim 1 or 2, wherein said arylene sulfide polymer is poly(phenylene sulfide).

4. The method of any of the preceding claims, wherein said solution in step (a) is heated to temperatures exceeding about 220 °C.

5. The method of any of the preceding claims, wherein said solution in step (b) is cooled to temperatures in the range of 130 to 200 °C.

6. The method of any of the preceding claims, wherein said solvent is N-methylcaprolactam.

7. The method of any of the preceding claims, wherein a promoter is added to said solution.

8. The method of claim 7, wherein said promoter is an alkali metal carbonate.

9. The method of claim 7, wherein said promoter is water.

10. The method of any of the preceding claims, wherein said solution comprises less than 5 weight percent arylene sulfide polymer.
